# EUROPÄISCHE PATENTANMELDUNG

(11) **EP 2 444 655 A1**
(43) Veröffentlichungstag der Anmeldung: **25.04.2012**
(21) Anmeldenummer: 11150173.0
(22) Anmeldetag: 05.01.2011
(51) Int. Cl.: F03B 13/06, F03B 15/00, F04D 27/00, F03B 3/10

(54) **Pumpspeicheranordnung, Verfahren zum Betreiben einer Pumpspeicheranordnung, sowie Pumpspeicherkraftwerk**

(30) Priorität: 20.10.2010 US 405096 P
(71) Anmelder: Sulzer Pumpen (Deutschland) GmbH, 76646 Bruchsal (DE)
(72) Erfinder: Hockenberger, Jürgen, 75031, Eppingen-Elsenz (DE); Dudenhöffer, Bernhard, 76863, Herxheim (DE)
(74) Vertreter: Sulzer Management AG

(57) **Zusammenfassung**

Die Erfindung betrifft eine Pumpspeicheranordnung (1), umfassend einen Energiespeicher (2) und eine Energiesenke (3), wobei zwischen dem Energiespeicher (2) und der Energiesenke (3) eine Hauptströmungsmaschine (4) derart ausgebildet und angeordnet ist, dass in einem Pumpbetrieb (PB) ein fluides Medium (5) aus der Energiesenke (3) durch die Hauptströmungsmaschine (4) unter Umwandlung von elektrischer Energie in kinetische Strömungsenergie in den Energiespeicher (2) beförderbar und bei einer vorgebbaren potentiellen Lageenergie speicherbar ist. In einem Turbinenbetrieb (TB) ist das fluide Medium (5) aus dem Energiespeicher (2) durch die Strömungsmaschine (4) unter Umwandlung der potentiellen Lageenergie in elektrische Energie in die Energiesenke (3) zurück beförderbar. Erfindungsgemäss ist in einem Strömungsstrang (400) eine Hilfsströmungsmaschine (41) in Serie zur Hauptströmungsmaschine (4) angeordnet und ein Umschaltmittel (6) derart vorgesehen, dass im Pumpbetrieb (PB) das fluide Medium (5) durch die Hauptströmungsmaschine (4) und die Hilfsströmungsmaschine (41) beförderbar ist und das fluide Medium (5) im Turbinenbetrieb (TB) nur durch die Hauptströmungsmaschine (4) beförderbar ist. Die Erfindung betrifft weiterhin ein Verfahren zum betreiben einer Pumpspeicheranordnung (1) sowie ein Pumpspeicherkraftwerk.

## Beschreibung

Die Erfindung betrifft eine Pumpspeicheranordnung, ein Verfahren zum Betreiben einer Pumpspeicheranordnung, sowie ein Pumpspeicherkraftwerk gemäss dem Oberbegriff der unabhängigen Ansprüche.

Pumpspeicherkraftwerke, die an sich seit vielen Jahrzehnten bekannt sind, gewinnen mit dem zunehmenden Ausbau erneuerbarer Energien zunehmend an Bedeutung, da sie momentan die einzige technische Lösung darstellen, mit der sehr grosse Mengen an elektrischer Energie gespeichert werden können. Es gibt nämlich Zeiten bei der Stromversorgung, in denen sehr viel Strom zur Verfügung stehen muss (Spitzenbedarf), wobei zu anderen Zeiten der Energiebedarf im Netz sinkt und dementsprechend weniger Strom nachgefragt wird. Bei Elektrizitätsüberschüssen im Netz lässt sich der Strom sehr preiswert am Markt beziehen und das Kraftwerk arbeitet im Pumpbetrieb, indem von einem tiefer gelegenen Wasserreservoir, zum Beispiel aus einem tiefer gelegenen Fluss oder See Wasser in ein höher gelegenes Reservoir, beispielweise in einen künstlichen See gepumpt wird. Wird dagegen im Netz kurzfristig viel Strom benötigt, arbeitet das Pumpspeicherkraftwerk im Turbinenbetrieb, indem das Wasser aus dem höher gelegenen Reservoir über eine Turbine an die ein Generator angeschlossen ist, wieder in das tiefer gelegene Reservoir zurück geleitet wird. Die dabei frei werdende potentielle Energie des Wassers treibt die Turbine und damit den Generator an, so dass die zuvor als potentielle Energie gespeicherte elektrische Energie wieder in elektrische Energie zurück verwandelt und dem Stromnetz zur Nutzung wieder zur Verfügung gestellt werden kann. Die zurück gewonnene elektrische Energie kann dann zu Zeiten hohen Stromverbrauchs zu einem Preis verkauft werden, der höher ist als der niedrige Einkaufspreis der elektrischen Energie mit der zuvor das obere Reservoir im Pumpbetrieb mit Wasser gefüllt wurde.

Somit haben die Pumpspeicherkraftwerke eine besondere Bedeutung für Formen der elektrischen Energiegewinnung, bei welchen die Menge an erzeugbarer Energie nicht schnell von einem hohen Niveau auf ein niedrigeres Niveau oder umgekehrt geregelt werden kann, wie es zum Beispiel bei konventionellen Kraftwerken der Fall ist. Mit Hilfe von Pumpspeicherkraftwerken können Lastwechsel im Stromnetz, die vom Kraftwerk nicht schnell genug nachvollzogen werden können, sehr gut ausgeglichen werden.

Besondere Vorteile hat der Einsatz von Pumpspeicherkraftwerken auch dann, wenn die erzeugte elektrische Energie entweder nicht gleichmässig oder nicht zu genau vorhersehbaren Zeiten anfällt. Das ist ein Problem mit dem man vor allem bei erneuerbaren Energien, wie der Gewinnung von elektrischer Energie aus Sonnenenergie oder Windenergie konfrontiert ist. Das Problem bei der Windenergie ist, dass die ins Stromnetz eingespeiste elektrische Energie zeitabhängig stark schwanken kann, weil die Menge an erzeugter elektrischer Energie natürlich direkt von der Stärke der Sonneneinstrahlung oder der herrschenden Winde abhängt.

Wird also zu Spitzenlastzeiten sehr viel Energie benötigt, wird das Wasser aus dem oberen Reservoir über ein Einlaufwerk und über Druckrohrleitungen in ein Maschinenhaus geleitet, wo es eine Turbine antreibt, die ihrerseits mit einem Generator verbunden ist, der die Rotationsenergie der Turbine in elektrische Energie umwandelt.

Steht dagegen im öffentlichen Stromnetz zu viel elektrische Energie zur Verfügung steht, z.B. in lastschwachen Zeiten, arbeitet das Pumpspeicherkraftwerk entgegengesetzt. Statt einer Kraftmaschine (Turbine) wird nun eine Arbeitsmaschine (Pumpe) eingesetzt. Die angeschlossene elektrische Maschine arbeitet jetzt nicht mehr als Generator sondern als elektrischer Motor und treibt so die Pumpe an, die zur Speicherung der elektrischen Energie wieder Wasser vom unteren Reservoir in das obere Reservoir fördert. Dabei ist es bekannt, dass verschiedene Maschinen für den Pump- und Turbinenbetrieb verwendet werden. Es sind aber auch Lösungen bekannt, bei denen ein und dieselbe Strömungsmaschine als Pumpe im Pumpbetrieb und als Turbine im Turbinenbetrieb benutzt wird.

Der Wirkungsgrad von bekannten Pumpspeicherkraftwerken liegt zwischen ca. 60% und 80%. Das heisst, von derjenigen verhältnismässig billigen elektrischen Energie, die zunächst zu Tieflastzeiten benötigt wird um Wasser in das höher gelegene Reservoir zu pumpen, können später rund 70% der Energie im Turbinenbetrieb über den Generator wieder zurück gewonnen und mit entsprechendem Gewinn verkauft werden.

In Zeiten in denen immer mehr elektrische Energie benötigt wird und nicht zuletzt aus Umweltschutzgründen ein besonders effizienter Umgang mit elektrischer Energie immer wichtiger wird, wird auch die Forderung immer stärker, den Wirkungsgrad von Pumpspeicherkraftwerken zu verbessern und auch möglichst die Konstruktion zu vereinfachen.

Was die Umwandlung von kinetischer Strömungsenergie in elektrische Energie und umgekehrt angeht, sind wie bereits erwähnt im Wesentlichen zwei unterschiedliche Lösungsansätze bekannt: entweder werden zum Pumpen auf den Pumpbetrieb optimierte Pumpen und zur Rückgewinnung der elektrischen Energie optimal auf den Turbinenbetrieb ausgerichtete Turbinen verwendet oder aber es wird für den Pumpbetrieb und den Turbinenbetrieb ein und dieselbe Strömungsmaschine verwendet

Beide Varianten haben jeweils Vor- und Nachteile.

Das prinzipielle Problem besteht nämlich darin, dass sich eine Strömungsmaschine grundsätzlich nicht gleichzeitig für den Turbinenbetrieb und den Pumpbetrieb ohne weiteres optimieren lässt. Wie der Fachmann weiss, muss eine Strömungsmaschine insbesondere an die Parameter Förderhöhe bzw. Fallhöhe H und Fördermenge Q konstruktiv angepasst werden, die in der Praxis oft in engen Grenzen fest vorgegeben sind. Aus grundsätzlichen, dem Fachmann bekannten technischen Gründen ist es dabei leider so, dass wenn eine Strömungsmaschine für eine bestimmte Förderhöhe H und eine bestimmte Fördermenge Q optimiert ist, dieselbe Strömungsmaschine für den Turbinenbetrieb nicht geeignet ist und umgekehrt.

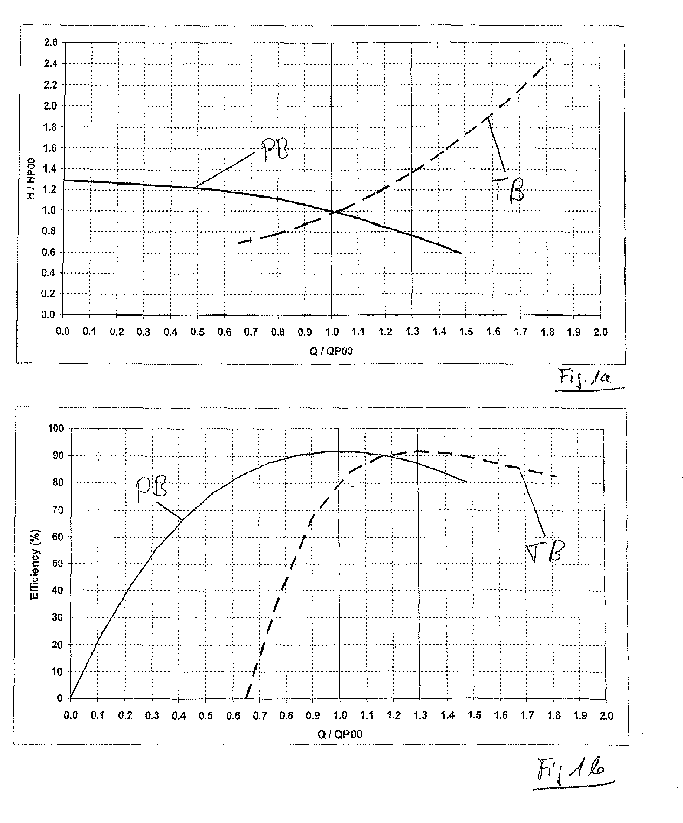

Diese an sich bekannte Tatsache ist anhand der Fig. 1a und Fig. 1b zur Erinnerung nochmals verdeutlicht. Fig. 1 a zeigt dabei die normierte Förderhöhe / Fallhöhe Kennlinie für ein und dieselbe Strömungsmaschine im Pumpbetrieb PB (durchgezogene Linie) und im Turbinenbetrieb TB (gestrichelte Linie), die, wie Fig. 1b zeigt, auf den Pumpbetrieb optimiert wurde. Auf der Abszisse ist dabei in beiden Figuren die normierte Fördermenge Q/QP00 aufgetragen, wobei Q die Fördermenge ist und QP00 die Fördermenge im Punkt optimalen Wirkungsgrades im Pumpbetrieb ist.

Auf der Ordinate ist in Fig. 1a die normierte Förderhöhe H/HP00 aufgetragen, wobei H die Förder- bzw. Fallhöhe ist und HP00 die Förderhöhe im Punkt des optimalen Wirkungsgrades im Pumpbetrieb ist.

In Fig. 1b ist auf der Ordinate der Wirkungsgrad aufgetragen.

Wie deutlich der Fig. 1b zu entnehmen ist, ist die Strömungsmaschine gemäss Fig. 1 a für den Betriebszustand [H/HP00, Q/QP00] = [1, 1] im Pumpbetrieb PB auf einen optimalen Wirkungsgrad optimiert. Das Maximum der Wirkungsgradkurve für den Pumpbetrieb liegt beim Betriebszustand [H/HP00, Q/QP00] = [1, 1]. Das heisst, die Strömungsmaschine ist für den Pumpbetrieb PB optimal ausgelegt.

Das hat zwangsläufig zur Folge, dass, wenn diese für den Pumpbetrieb PB optimierte Strömungsmaschine im Turbinenbetrieb TB betrieben wird, die Strömungsmaschine beim Turbinieren nicht bei ihrem optimalen Wirkungsgrad läuft. Der optimale Wirkungsgrad im Turbinenbetrieb TB würde gemäss Fig. 1b bei ca. Q/QP00 = 1,3 liegen, also weit neben dem optimalen Wert für den Pumpbetrieb, der gemäss Fig. 1b bei Q/QP00 = 1 liegt.

Um dieses Problem zu umgehen ist es zum Beispiel bekannt, die Strömungsmaschinen mit verstellbaren Elementen, wie verstellbaren Laufradschaufeln und / oder verstellbaren Leitschaufeln zu versehen. Durch solche Massnahmen ist es möglich, die Strömungsmaschine im jeweiligen Betriebszustand auf den optimalen Wirkungsgrad einzustellen. Solche Konstruktionen sind aber aufwändig und teuer und vor allem störanfällig und sehr wartungsintensiv.

Daher wird normalerweise ein doppelter Maschinensatz bestehend aus einer Pumpe und einer Turbine bereitgestellt, die jeweils für den Pumpbetrieb und den Turbinenbetrieb optimiert sind. Die Pumpe wird dann nur für den Pumpbetrieb und die Turbine nur für den Turbinenbetrieb verwendet, wobei beide Maschinen natürlich die volle benötigte Leistung erbringen müssen, so dass ein doppelter Satz von Strömungsmaschinen bereitgestellt werden muss.

Dabei existiert bei den bekannten Anlagen noch ein weiteres Problem ganz anderer Art. Eine Pumpe braucht am Pumpeneinlass einen bestimmten Eingangssolldruck, genannt "Net Positive Suction Head", abgekürzt NPSH, der nicht unterschritten werden darf, da es ansonsten beim Pumpen zur Bildung von Gasblasen im zu pumpenden Medium kommen kann, wodurch das Pumpen im schlimmsten Fall verunmöglicht werden kann oder die Pumpe durch massive Druck- bzw. Durchflussschwankungen schwer beschädigt werden kann.

Dieser erforderliche Eingangssolldruck, der ein Mindest-Eingangsdruck ist, ist durch die konstruktive Ausgestaltung der Pumpe und die Drehzahl im Wesentlichen festgelegt, wobei die konstruktive Ausgestaltung und die notwendige Drehzahl der Pumpe wiederum weitestgehend durch die Randbedingungen Fördermenge und Förderhöhe vorgegeben sind, die in der Regel im Fall von Pumpspeicherkraftwerken kaum beeinflussbar sind, weil durch das verfügbare Gelände zum Beispiel die Höhendifferenz zwischen unterem und oberem Wasserreservoir festgelegt ist und auch die notwendige Fördermenge oder Leistung vorgegeben ist.

Somit bestimmen die vorgenannten Randbedingungen letztlich den notwendigen Eingangssolldruck NPSH der am Eingang der Pumpe anliegen muss.

Das hat zur Folge, dass die Pumpen oft in grösserer Tiefe unterhalb des tiefst möglichen Wasserspiegels des unteren Wasserreservoirs vorgesehen werden müssen, damit am Pumpeneingang immer der notwendige Eingangssolldruck NPSH anliegt. Da der Eingangssolldruck NPSH im Wesentlichen proportional zum Quadrat der Drehzahl der Pumpe ist, resultiert bei hohen Pumpendrehzahlen ein hoher Eingangssolldruck NPSH, was wiederum einen tiefen Einbau der Pumpe erfordert, was natürlich bauseitig aufwändig ist.

Andererseits ist die Leistungsdichte der Pumpe, die als Produkt von Fördermenge pro Sekunde und Pumphöhe definiert ist, abhängig von der Drehzahl und vom Rotordurchmesser der Pumpe. Wie oben erläutert, ist die notwendige Leistungsdichte der Pumpe durch die Randbedingungen vorgegeben. Somit stehen bei gegebener Leistungsdichte im Wesentlichen zwei Parameter zur Verfügung um die Pumpe auf die erforderliche Leistungsdichte einzustellen. Wird eine Pumpe mit kleinem Rotordurchmesser gewählt, muss die Pumpe eine hohe Drehzahl haben, was dazu führt, dass wie oben erläutert ein hoher Eingangssolldruck notwendig ist und die Pumpe somit ausreichend tief in Bezug auf den tiefst möglichen Wasserspiegel des unteren Reservoirs eingebaut werden muss.

Eine solche schnell drehende Pumpe hat den Vorteil, dass sie baulich klein ausgestaltet werden kann, wodurch die Pumpe billiger hergestellt werden kann und natürlich auch platzsparender ist als eine grosse Pumpe. Dieser Vorteil geht aber wieder dadurch verloren, dass die Pumpe tief eingebaut werden muss, was die Baukosten massiv in die Höhe treibt.

Wählt man dagegen eine relativ grosse Pumpe mit einem grossen Rotordurchmesser, so kann man die notwendige Leistungsdichte mit einer kleineren Drehzahl erreichen. Das hat den Vorteil, dass man die Pumpe höher als eine schnell laufende Pumpe einbauen kann, weil der notwendige Eingangssolldruck niedriger ist. Dieser Vorteil geht aber auf Kosten der Baugrösse der Pumpe. Eine grosse Pumpe ist natürlich teuerer in der Herstellung und im Betrieb.

Aufgabe der Erfindung ist es daher die aus dem Stand der Technik bekannten Probleme zu vermeiden und eine Pumpspeicheranordnung bereit zu stellen, die auf den Turbinenbetrieb und den Pumpbetrieb gleichzeitig optimiert ist und die eine möglichst grosse Flexibilität bei der Auswahl der Pumpengrösse und der Pumpendrehzahl gewährleistet. Darüber hinaus ist es eine Aufgabe der Erfindung, ein Verfahren zum Betreiben einer Pumpspeicheranordnung anzugeben, sowie ein entsprechendes Pumpspeicherkraftwerk bereitzustellen.

Die diese Aufgaben lösenden Gegenstände der Erfindung sind durch die Merkmale der unabhängigen Ansprüche 1, 9 und 14 gekennzeichnet.

Die abhängigen Ansprüche beziehen sich auf besonders vorteilhafte Ausführungsformen der Erfindung.

Die Erfindung betrifft somit eine Pumpspeicheranordnung, umfassend einen Energiespeicher und eine Energiesenke, wobei zwischen dem Energiespeicher und der Energiesenke eine Hauptströmungsmaschine derart ausgebildet und angeordnet ist, dass in einem Pumpbetrieb ein fluides Medium aus der Energiesenke durch die Hauptströmungsmaschine unter Umwandlung von elektrischer Energie in kinetische Strömungsenergie in den Energiespeicher beförderbar und bei einer vorgebbaren potentiellen Lageenergie speicherbar ist. In einem Turbinenbetrieb ist das fluide Medium aus dem Energiespeicher durch die Strömungsmaschine unter Umwandlung der potentiellen Lageenergie in elektrische Energie in die Energiesenke zurück beförderbar. Erfindungsgemäss ist in einem Strömungsstrang eine Hilfsströmungsmaschine in Serie zur Hauptströmungsmaschine angeordnet und ein Umschaltmittel derart vorgesehen, dass im Pumpbetrieb das fluide Medium durch die Hauptströmungsmaschine und die Hilfsströmungsmaschine beförderbar ist und das fluide Medium im Turbinenbetrieb nur durch die Hauptströmungsmaschine beförderbar ist.

Wesentlich für die Erfindung ist es somit, dass im Pumpbetrieb das fluide Medium durch die in Serie angeordnete Hilfsströmungsmaschine und die Hauptströmungsmaschine aus der Energiesenke in den Energiespeicher beförderbar ist. Und im Turbinenbetrieb das fluide Medium aus dem Energiespeicher nur durch die Hauptströmungsmaschine zurück in die Energiesenke beförderbar ist, indem das fluide Medium im Turbinenbetrieb durch das Umschaltmittel an der Hilfsströmungsmaschine vorbei beförderbar ist.

Damit ist es möglich, die Hilfsströmungsmaschine und die Hauptströmungsmaschine derart auszugestalten, dass die Serienanordnung von Hilfsströmungsmaschine und Hauptströmungsmaschine insgesamt für den Pumpbetrieb optimiert ist, wobei gleichzeitig die

Hauptströmungsmaschine allein für den Turbinenbetrieb optimiert ist.

In der Praxis kann das zum Beispiel dadurch bewerkstelligt werden, dass zunächst die Hauptströmungsmaschine so ausgestaltet wird, dass sie im Turbinenbetrieb bei ihrem optimalen Wirkungsgrad betreibbar ist. Das hat zur Folge, dass die so ausgestaltete Hauptströmungsmaschine allein dann im Pumpbetrieb nicht mehr bei ihrem optimalen Wirkungsgrad betreibbar ist. Dieser Mangel wird dadurch behoben, dass für den Pumpenbetrieb zusätzlich noch die Hilfsströmungsmaschine in Serie zur Hauptströmungsmaschine zugeschaltet wird. Die Hilfsströmungsmaschine wird dann so gewählt, dass der Wirkungsgrad bzw. der NPSH-Wert der Kombination aus Hilfsströmungsmaschine und Hauptströmungsmaschine für den Pumpbetrieb optimiert ist.

Somit ist es durch die Erfindung erstmals gelungen einen Maschinensatz bereit zustellen, dessen Wirkungsgrad sowohl für den Pumpbetrieb als auch für den Turbinenbetrieb optimiert ist und zwar ohne dass an den Maschinen verstellbare Elementen, wie zum Beispiel verstellbare Laufradschaufeln und / oder verstellbare Leitschaufeln vorgesehen werden müssen, die die Eingangs beschriebenen Nachteile haben.

Auch ist es nicht notwendig einen kompletten doppelten Maschinensatz bestehend aus einer Pumpe und einer Turbine bereitzustellen, die jeweils für den Pumpbetrieb und den Turbinenbetrieb optimiert sind und entsprechend beide auf die volle Pump- bzw. Turbinenleistung ausgelegt sein müssen. Bei der Erfindung muss lediglich für den Pumpbetrieb eine relative kleine Hilfsströmungsmaschine in Form einer Zusatzpumpe bereitgestellt werden.

In einem für die Praxis besonders wichtigen Ausführungsbeispiel der vorliegenden Erfindung wird die Pumpspeicheranordnung in einem Pumpspeicherkraftwerk verwendet. Nicht nur in dieser Anwendung entfaltet die erfindungsgemässe Pumpspeicheranordnung einen weiteren wesentlichen Vorteil.

Wie eingangs bereist ausführlich erläutert, braucht eine Pumpe am Pumpeneinlass einen bestimmten Eingangssolldruck, genannt "Net Positive Suction Head", abgekürzt NPSH, der nicht unterschritten werden darf.

Dieser erforderliche Mindest-Eingangsdruck ist wie ebenfalls bereits erläutert durch die konstruktive Ausgestaltung der Pumpe und die Drehzahl im Wesentlichen festgelegt, wobei die konstruktive Ausgestaltung und die notwendige Drehzahl der Pumpe wiederum weitestgehend durch die Randbedingungen Fördermenge und Förderhöhe vorgegeben sind, die in der Regel im Fall von Pumpspeicherkraftwerken kaum beeinflussbar sind, weil durch das verfügbare Gelände zum Beispiel die Höhendifferenz zwischen unterem und oberem Wasserreservoir festgelegt ist und auch die notwendige Fördermenge vorgegeben ist.

Da die Anordnung zum Pumpen gemäss der Erfindung nun nicht mehr nur eine Strömungsmaschine, sondern mindestens zwei Maschinen, nämlich die Hilfsströmungsmaschine und die Hauptströmungsmaschine umfasst, besteht zusätzlich eine sehr weitgehende Flexibilität was die Anpassung der Pumpenanordnung an den aufgrund der Verhältnisse zur Verfügung stehenden Eingangssolldruck an den Pumpen angeht.

Wird beispielweise die Hilfsströmungsmaschine bei einem Pumpspeicherkraftwerk zwischen der Hauptströmungsmaschine und einem unteren Wasserreservoir vorgesehen, so kann bei vorgegebener Leistungsdichte, die als Produkt von Fördermenge pro Zeiteinheit und Pumphöhe definiert ist und abhängig von der Drehzahl und vom Rotordurchmesser der Pumpe ist, die Grösse bzw. die Drehzahl der Hilfsströmungsmaschine in weiten Grenzen flexibel gewählt werden, indem die Hauptströmungsmaschine entsprechend auf die gewählte Hilfsströmungsmaschine geeignet abgestimmt wird.

So ist es möglich, eine baulich verhältnismässig kleine Hilfsströmungsmaschine zu wählen, die trotzdem gleichzeitig eine verhältnismässig kleine Drehzahl und damit einen niedrigen Eingangssolldruck hat, so dass die Hilfsströmungsmaschine ohne grossen baulichen Aufwand in Bezug auf den tiefst möglichen Wasserspiegel des unteren Wasserreservoirs vorgesehen werden kann, ohne dass die Pumpe wie im Stand der Technik in verhältnismässig grosser Tiefe in Bezug auf das untere Wasserreservoir eingebaut werden müsste. Das wird dadurch möglich, dass die Hilfsströmungsmaschine nicht die gesamte Pumpleistung erbringen muss, sondern z.B. nur 30% der gesamten Pumpleistung erbringt.

In einem anderen Ausführungsbeispiel ist es umgekehrt auch möglich, das die Hilfsströmungsmaschine entsprechend auf die gewählte Hauptströmungsmaschine geeignet abgestimmt wird.

Auch kann, eine baulich verhältnismässig kleine Hauptströmungsmaschine gewählt werden, wobei die Hilfsströmungsmaschine natürlich auch nicht die gesamte Pumpleistung erbringen muss, aber z.B. rund 70% der gesamten Pumpleistung erbringen kann.

In einem besonders bevorzugten Ausführungsbeispiel der vorliegenden Erfindung ist die Hilfsströmungsmaschine zwischen der Energiesenke, also zum Beispiel zwischen einem unteren Wasserreservoir und der Hauptströmungsmaschine angeordnet.

Die Hauptströmungsmaschine ist dabei besonders vorteilhaft, aber nicht notwendig, zwischen der Hilfsströmungsmaschine und dem Energiespeicher angeordnet.

In der Praxis, zum Beispiel bei Verwendung der Pumpspeicheranordnung in einem Pumpspeicherkraftwerk ist mit der Hilfsströmungsmaschine im Betriebszustand zum Beispiel bis zu 50% der Pumphöhe der Hauptströmungsmaschine, bevorzugt zwischen 10% und 40%, besonders bevorzugt ca. 30% der Pumphöhe der Hauptströmungsmaschine erreichbar.

Dabei kann die Hilfsströmungsmaschine vorteilhaft eine Pumpe sein, die einen kleineren Eingangssolldruck als die Hauptströmungsmaschine hat.

In der Praxis wird eine erfindungsgemässe Pumpspeicheranordnung oft eine Mehrzahl von Hauptströmungsmaschinen und / oder eine Mehrzahl von Hilfsströmungsmaschinen umfassen, wobei zur Leistungssteigerung eine Mehrzahl von Strömungssträngen, jeweils umfassend ein oder mehrere Hilfsströmungsmaschinen und ein oder mehrere Hauptströmungsmaschinen, die besonders vorteilhaft in paralleler Anordnung vorgesehen sein können.

Zum Beispiel bei einem Pumpspeicherkraftwerk kann dabei der Energiespeicher ein auf einer Höhe gelegenes Wasserreservoir, insbesondere ein See sein, und die Energiesenke ein um eine bestimmte Höhendifferenz tiefer als der Energiespeicher gelegenes Wasserreservoir, insbesondere ein See oder ein Fluss sein.

Die Erfindung betrifft weiter ein Verfahren zum Betreiben einer Pumpspeicheranordnung, umfassend einen Energiespeicher und eine Energiesenke, wobei zwischen dem Energiespeicher und der Energiesenke eine Hauptströmungsmaschine derart angeordnet wird, dass in einem Pumpbetrieb ein fluides Medium aus der Energiesenke durch die Hauptströmungsmaschine unter Umwandlung von elektrischer Energie in kinetische Strömungsenergie in den Energiespeicher befördert und bei einer vorgebbaren potentiellen Lageenergie im Energiespeicher gespeichert wird. Dabei wird in einem Turbinenbetrieb das fluide Medium aus dem Energiespeicher durch die Strömungsmaschine unter Umwandlung der potentiellen Lageenergie in elektrische Energie, in die Energiesenke zurück befördert. Erfindungsgemäss wird in einem Strömungsstrang eine Hilfsströmungsmaschine in Serie zur Hauptströmungsmaschine angeordnet und ein Umschaltmittel derart vorgesehen, dass im Pumpbetrieb das fluide Medium durch die Hauptströmungsmaschine und die Hilfsströmungsmaschine befördert wird und das fluide Medium im Turbinenbetrieb nur durch die Hauptströmungsmaschine befördert wird

Dabei wird in einem bevorzugten Ausführungsbeispiel mittels der Hilfsströmungsmaschine das fluide Medium, insbesondere Wasser aus der Energiesenke der Hauptströmungsmaschine zugeführt und die Hauptströmungsmaschine befördert das fluide Medium weiter in den Energiespeicher.

Besonders vorteilhaft werden die Hauptströmungsmaschine und die Hilfsströmungsmaschine so ausgestaltet, dass mit der Hilfsströmungsmaschine im Betriebszustand bis zu 50% der Pumphöhe der Hauptströmungsmaschine, bevorzugt zwischen 10% und 40%, besonders bevorzugt ca. 30% der Pumphöhe der Hauptströmungsmaschine erreicht wird.

In der Praxis wird dabei als Hilfsströmungsmaschine häufig eine Pumpe verwendet, die einen kleineren Eingangssolldruck als die Hauptströmungsmaschine hat.

Zur Steigerung der Leistung kann eine Mehrzahl von Hauptströmungsmaschinen und / oder eine Mehrzahl von Hilfsströmungsmaschinen vorgesehen werden, wobei die Mehrzahl von Hauptströmungsmaschinen und / oder die Mehrzahl von Hilfsströmungsmaschinen bevorzugt in einer Mehrzahl von Strömungssträngen, insbesondere in paralleler Anordnung vorgesehen werden können.

Schliesslich betrifft die Erfindung ein Pumpspeicherkraftwerk umfassend eine erfindungsgemässe Pumpspeicheranordnung, das gemäss einem Verfahren der Erfindung betrieben werden kann.

Im Folgenden wird die Erfindung an Hand der Zeichnung näher erläutert. Es zeigen in schematischer Darstellung:
- Fig. 1 a: Normierte Förderhöhe / Fallhöhe Kennlinie für ein und dieselbe Strömungsmaschine im Pump- und Turbinenbetrieb;
- Fig. 1 b: Wirkungsgrad Kennlinie für den Pump- und Turbinenbetrieb gemäss Fig. 1 a;
- Fig. 2: ein erfindungsgemässes Pumpspeicherkraftwerk;

Die an sich bekannten Kennlinien einer Strömungsmaschine für den Pump- und den Turbinenbetrieb gemäss Fig. 1a und Fig. 1b wurden eingangs bereits ausführlich diskutiert.

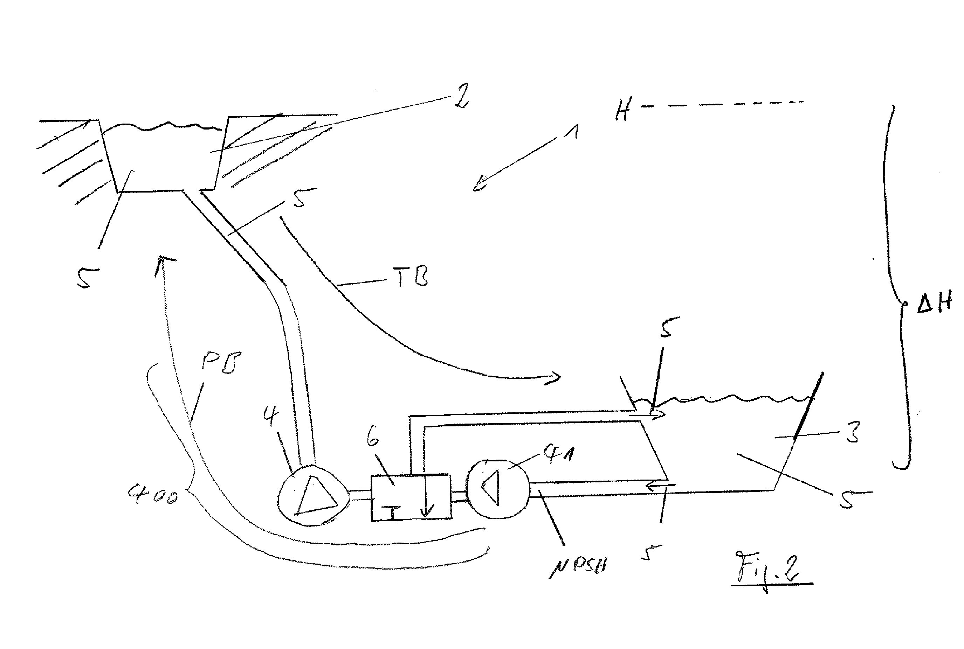

Die Fig. 2 zeigt in vereinfachter schematischer Darstellung ein Pumpspeicherkraftwerk gemäss der vorliegenden Erfindung.

Das Pumpspeicherkraftwerk der Fig. 2 umfasst eine erfindungsgemässe Pumpspeicheranordnung 1, mit einem Energiespeicher 2, der hier ein künstlicher, auf einer Anhöhe der Höhe H gelegener See ist, sowie eine Energiesenke 3, die ein um die Höhendifferenz ΔH tiefer als der Energiespeicher 2 gelegener Fluss ist. Zwischen dem Energiespeicher 2 und der Energiesenke 3 ist eine Hauptströmungsmaschine 4 derart ausgebildet und angeordnet, dass in einem Pumpbetrieb PB ein fluides Medium 5, hier Wasser aus der Energiesenke 3 durch die Hauptströmungsmaschine 4 unter Umwandlung von elektrischer Energie in kinetische Strömungsenergie in den Energiespeicher 2 beförderbar und bei einer vorgebbaren potentiellen Lageenergie im oberen künstlichen See speicherbar ist. Umgekehrt ist in einem Turbinenbetrieb TB das fluide Medium 5 aus dem Energiespeicher 2 durch die Strömungsmaschine 4 unter Umwandlung der potentiellen Lageenergie in elektrische Energie in die Energiesenke 3 zurück beförderbar.

Im Gegensatz zum Stand der Technik ist bei der vorliegenden Erfindung in einem Strömungsstrang 400 eine Hilfsströmungsmaschine 41, an deren Eingang der Pumpeneingangsdruck NPSH anliegt, in Serie zur Hauptströmungsmaschine 4 angeordnet und es ist ein Umschaltmittel 6 derart vorgesehen, so dass im Pumpbetrieb PB das fluide Medium 5 durch die Hauptströmungsmaschine 4 und die Hilfsströmungsmaschine 41 beförderbar ist und das fluide Medium 5 im Turbinenbetrieb TB nur durch die Hauptströmungsmaschine 4 beförderbar ist.

Aus Gründen der Übersichtlichkeit wurde auf die explizite Darstellung der elektrischen Maschinen verzichtet, die die Hauptströmungsmaschine 4 und die Hilfsströmungsmaschine 41 im Pumpbetrieb PB als Motor antreibt bzw. die im Turbinenbetrieb TB als Generator die kinetische Strömungsenergie wieder in elektrische Energie zurück verwandelt. Die vorgenannten elektrischen Maschinen sind in an sich bekannter Weise und in an sich bekannter Funktion einerseits mit der Hauptströmungsmaschine 4 und der Hilfsströmungsmaschine 41 mechanisch gekoppelt und andererseits an das öffentliche Stromnetz elektrisch gekoppelt, so dass über die Strömungsmaschinen 4, 41 und die elektrischen Maschinen kinetische Strömungsenergie des Fluids 5 und elektrische Energie aus dem öffentlichen Stromnetz ineinander umwandelbar und damit austauschbar ist.

Die Hilfsströmungsmaschine 41 ist dabei zwischen der Energiesenke 3 und der Hauptströmungsmaschine 4 angeordnet, die ihrerseits zwischen der Hilfsströmungsmaschine 41 und dem Energiespeicher 2 angeordnet ist. Im Beispiel gemäss der schematischen Fig. 2 sind mit der Hilfsströmungsmaschine 41 grob ca. 30% der Pumphöhe der Hauptströmungsmaschine 4 erreichbar ist, wobei die Hilfsströmungsmaschine 41 eine Pumpe ist, die einen kleineren Eingangssolldruck NPSH als die Hauptströmungsmaschine 4 hat.

In der Praxis wird die erfindungsgemässe Pumpspeicheranordnung 1 eine Mehrzahl von Hauptströmungsmaschinen 4 und / oder eine Mehrzahl von Hilfsströmungsmaschinen 41 umfassen, wobei in Fig. 2 aus Gründen der Übersichtlichkeit auf die Darstellung von weiteren Strömungssträngen 400, die insbesondere in paralleler Anordnung vorgesehen sein können, verzichtet wurde.

Durch die Erfindung werden somit erstmals mehrere aus dem Stand der Technik bekannte Probleme gleichzeitig gelöst, die vor allem bei Pumpspeicherkraftwerken seit langem ungelöst waren. Die erfindungsgemässe Pumpspeicheranordnung ist gleichzeitig auf den Pumpbetrieb und den Turbinenbetrieb optimiert. Zusätzlich ist das Problem mit einem zu hohen Eingangssolldruck dadurch gelöst, dass diejenige Maschine, in der Regel die Hilfsströmungsmaschine, die das Wasser unmittelbar aus dem unteren Wasserreservoir heraus pumpt, nur noch einen Bruchteil der insgesamt notwendigen Pumpleistung erbringen muss. Dadurch können die Baukosten deutlich gesenkt werden, da die Hilfsströmungsmaschine nicht mehr in grosser Tiefe in Bezug auf den tiefst möglichen Wasserspiegel des unteren Wasserreservoirs eingebaut werden muss, da die Leistungsdichte, d.h. im wesentlichen die Drehzahl und die Baugrösse der Hilfsströmungsmaschine und damit der Mindest-Eingangsdruck in weiten Grenzen frei wählbar und an die speziellen Verhältnisse anpassbar ist.

Es versteht sich, dass alle oben beschriebenen Ausführungsbeispiele der Erfindung nur beispielhaft bzw. exemplarisch zu verstehen sind und die Erfindung insbesondere, aber nicht nur, alle geeigneten Kombinationen der beschriebenen Ausführungsbeispiele umfasst.

## Patentansprüche

1. Pumpspeicheranordnung, umfassend einen Energiespeicher (2) und eine Energiesenke (3), wobei zwischen dem Energiespeicher (2) und der Energiesenke (3) eine Hauptströmungsmaschine (4) derart ausgebildet und angeordnet ist, dass in einem Pumpbetrieb (PB) ein fluides Medium (5) aus der Energiesenke (3) durch die Hauptströmungsmaschine (4) unter Umwandlung von elektrischer Energie in kinetische Strömungsenergie in den Energiespeicher (2) beförderbar und bei einer vorgebbaren potentiellen Lageenergie speicherbar ist, und in einem Turbinenbetrieb (TB) das fluide Medium (5) aus dem Energiespeicher (2) durch die Strömungsmaschine (4) unter Umwandlung der potentiellen Lageenergie in elektrische Energie in die Energiesenke (3) zurück beförderbar ist, **dadurch gekennzeichnet, dass** in einem Strömungsstrang (400) eine Hilfsströmungsmaschine (41) in Serie zur Hauptströmungsmaschine (4) angeordnet und ein Umschaltmittel (6) derart vorgesehen ist, so dass im Pumpbetrieb (PB) das fluide Medium (5) durch die Hauptströmungsmaschine (4) und die Hilfsströmungsmaschine (41) beförderbar ist und das fluide Medium (5) im Turbinenbetrieb (TB) nur durch die Hauptströmungsmaschine (4) beförderbar ist.

2. Pumpspeicheranordnung nach Anspruch 1, wobei die Hilfsströmungsmaschine (41) zwischen der Energiesenke (3) und der Hauptströmungsmaschine (4) angeordnet ist.

3. Pumpspeicheranordnung nach Anspruch 1 oder 2, wobei die Hauptströmungsmaschine (4) zwischen der Hilfsströmungsmaschine (41) und dem Energiespeicher (2) angeordnet ist.

4. Pumpspeicheranordnung nach einem der vorangehenden Ansprüche, wobei mit der Hilfsströmungsmaschine (41) im Betriebszustand bis zu 50% der Pumphöhe der Hauptströmungsmaschine (4), bevorzugt zwischen 10% und 40%, besonders bevorzugt ca. 30% der Pumphöhe der Hauptströmungsmaschine (4) erreichbar ist.

5. Pumpspeicheranordnung nach einem der vorangehenden Ansprüche, wobei die Hilfsströmungsmaschine (41) eine Pumpe ist, die einen kleineren Eingangssolldruck (NPSH) als die Hauptströmungsmaschine (4) hat.

6. Pumpspeicheranordnung nach einem der vorangehenden Ansprüche, wobei eine Mehrzahl von Hauptströmungsmaschinen (4) und / oder eine Mehrzahl von Hilfsströmungsmaschinen (41) vorgesehen sind.

7. Pumpspeicheranordnung nach einem der vorangehenden Ansprüche, wobei eine Mehrzahl von Strömungssträngen (400), insbesondere in paralleler Anordnung vorgesehen sind.

8. Pumpspeicheranordnung nach einem der vorangehenden Ansprüche, wobei der Energiespeicher (2) ein auf einer Höhe (H) gelegenes Wasserreservoir, insbesondere ein See ist, und die Energiesenke ein um die Höhendifferenz (ΔH) tiefer der Energiespeicher (2) gelegenes Wasserreservoir, insbesondere ein See oder ein Fluss ist.

9. Verfahren zum Betreiben Pumpspeicheranordnung (1), umfassend einen Energiespeicher (2) und eine Energiesenke (3), wobei zwischen dem Energiespeicher (2) und der Energiesenke (3) eine Hauptströmungsmaschine (4) derart angeordnet wird, dass in einem Pumpbetrieb (PB) ein fluides Medium (5) aus der Energiesenke (3) durch die Hauptströmungsmaschine (4) unter Umwandlung von elektrischer Energie in kinetische Strömungsenergie in den Energiespeicher (2) befördert und bei einer vorgebbaren potentiellen Lageenergie im Energiespeicher (2) gespeichert wird, und in einem Turbinenbetrieb (TB) das fluide Medium (5) aus dem Energiespeicher (2) durch die Strömungsmaschine (4) unter Umwandlung der potentiellen Lageenergie in elektrische Energie in die Energiesenke (3) zurück befördert wird, **dadurch gekennzeichnet, dass** in einem Strömungsstrang (400) eine Hilfsströmungsmaschine (41) in Serie zur Hauptströmungsmaschine (4) angeordnet und ein Umschaltmittel (6) derart vorgesehen wird, dass im Pumpbetrieb (PB) das fluide Medium (5) durch die Hauptströmungsmaschine (4) und die Hilfsströmungsmaschine (41) befördert wird und das fluide Medium (5) im Turbinenbetrieb (TB) nur durch die Hauptströmungsmaschine (4) befördert wird

10. Verfahren nach Anspruch 9, wobei mittels der Hilfsströmungsmaschine (41) das fluide Medium (5), insbesondere Wasser aus der Energiesenke (3) der Hauptströmungsmaschine (4) zugeführt wird und die Hauptströmungsmaschine (4) das fluide Medium (5) in den Energiespeicher (2) befördert.

11. Verfahren nach Anspruch 9 oder 10, wobei mit der Hilfsströmungsmaschine (41) im Betriebszustand bis zu 50% der Pumphöhe der Hauptströmungsmaschine (4), bevorzugt zwischen 10% und 40%, besonders bevorzugt ca. 30% der Pumphöhe der Hauptströmungsmaschine (4) erreicht wird.

12. Verfahren nach einem der Ansprüche 9 bis 11, wobei als Hilfsströmungsmaschine (41) eine Pumpe verwendet wird, die einen kleineren Eingangssolldruck (NPSH) als die Hauptströmungsmaschine (4) hat.

13. Verfahren nach einem der vorangehenden Ansprüche, wobei eine Mehrzahl von Hauptströmungsmaschinen (4) und / oder eine Mehrzahl von Hilfsströmungsmaschinen (41) vorgesehen werden, wobei die Mehrzahl von Hauptströmungsmaschinen (4) und / oder die Mehrzahl von Hilfsströmungsmaschinen (41) bevorzugt in einer Mehrzahl von Strömungssträngen (400), insbesondere in paralleler Anordnung vorgesehen werden.

14. Pumpspeicherkraftwerk umfassend eine Pumpspeicheranordnung (1) nach einem der Ansprüche 1 bis 8, das gemäss einem Verfahren nach einem der Ansprüche 9 bis 13 betreibbar ist.
